(19) Europäisches Patentamt
European Patent Office
Office européen des brevets

(11) **EP 2 450 314 B1**

(12) **FASCICULE DE BREVET EUROPEEN**

(45) Date de publication et mention
de la délivrance du brevet:
**01.07.2015 Bulletin 2015/27**

(51) Int Cl.:
***C02F 1/70*** *(2006.01)*      ***C02F 1/72*** *(2006.01)*
***C09K 8/588*** *(2006.01)*     *C02F 1/24* *(2006.01)*
*C02F 1/76* *(2006.01)*      *C02F 103/10* *(2006.01)*

(21) Numéro de dépôt: **11186957.4**

(22) Date de dépôt: **27.10.2011**

(54) **Procédé de traitement d'eau de production produite a l'issue d'un procédé de récupération assistée du pétrole mettant en oeuvre des polymères**

Wasseraufbereitungsverfahren für Wasser, das aus einem unterstützten Erdölaufbereitungsverfahren entsteht, bei dem Polymere zum Einsatz kommen

Method for treating production water produced at the end of a method for enhanced oil recovery using polymers

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.11.2010 FR 1059042**

(43) Date de publication de la demande:
**09.05.2012 Bulletin 2012/19**

(73) Titulaire: **S.P.C.M. SA**
**42160 Andrézieux Bouthéon (FR)**

(72) Inventeurs:
• **Pich, René**
**42000 Saint Etienne (FR)**
• **Gil, Ludwig**
**42000 Saint Etienne (FR)**

(74) Mandataire: **Denjean, Eric et al**
**Cabinet Laurent & Charras**
**"Le Contemporain"**
**50, Chemin de la Bruyère**
**69574 Dardilly Cedex (FR)**

(56) Documents cités:
**WO-A1-03/104152**      **WO-A1-2009/018099**
**FR-A1- 2 940 348**     **US-A- 4 486 340**
**US-A1- 2007 102 359**

**Description**

Depuis le premier choc pétrolier, la récupération assistée du pétrole a été étudiée et a fait l'objet de réalisations industrielles en nombre limité.

Un des procédés consiste à viscosifier l'eau injectée dans le réservoir avec des polymères de manière à élargir le bulbe de balayage et obtenir en moyenne 10% de pétrole en plus.

Les polymères typiques sont parfois des polysaccharides mais plus souvent des polymères à base d'acrylamide (représentant, de préférence, au moins 10% en moles) copolymérisé avec au choix l'acide acrylique, l'acide 2-acrylamido-2-méthylpropane sulfonique ou la N-vinyl pyrrolidone.

Les dosages typiques utilisés vont de 400 ppm à 8000 ppm.

Dans certains cas, on met en oeuvre un procédé plus complexe utilisant soit un tensioactif (procédé SP « Surfactant Polymer »), soit un mélange base/tensioactif (procédé ASP « Alkali Surfactant Polymer ») permettant d'émulsifier le pétrole en place et récupérer en moyenne une quantité supplémentaire de pétrole de 20%.

Les bases sont généralement constituées d'un ou plusieurs agents alcalins, par exemple choisis parmi les hydroxydes, les carbonates, les borates et les métaborates de métaux alcalins ou d'alcalino-terreux. De préférence, l'hydroxyde de sodium ou le carbonate de sodium seront utilisés. Les dosages vont de 300 ppm à 30 000 ppm.

Les surfactants sont de toutes sortes, à savoir anioniques, cationiques, non ioniques, zwitterioniques et de structure variées, à savoir linéaires geminis, ramifiés. Ils sont généralement formulés en présence de co-tensioactifs solvants et/ou cosolvants, et sont utilisés à des dosages allant de 300 à 30 000 ppm.

Ces procédés sont assez bien connus aujourd'hui. Ils restent perfectibles car dans de nombreux cas, les polymères ne sont pas utilisés dans des conditions telles que le poids moléculaire soit stable dans le temps. Les polymères sont dégradés et leurs poids moléculaires diminuent de 4 à 10 fois avec des poids moléculaires finaux de 2 à 5 Millions. De plus, une partie importante du polymère disparait dans le champ soit par précipitation (surtout à haute température avec des saumures riches en ions divalents tels que Ca 2+ ou Mg2+), soit par adsorption.

A l'issue de la récupération, on obtient quoi qu'il en soit un mélange de pétrole et d'eau dite « de production », qu'il convient de récupérer et de traiter. Différentes étapes sont alors possibles. En premier lieu, des étapes de séparation eau/huile sont effectuées, par exemple dans des cuves de séparation, en particulier dans des séparateurs sans plaques et/ou des séparateurs à plaques inclinées. L'eau de production contient encore des impuretés et doit être encore purifiée et traitée de manière à pouvoir être de nouveau réinjectée dans le réservoir en présence de polymère. La suite du traitement consiste essentiellement et séquentiellement dans des étapes de flottation et/ou décantation et enfin dans des étapes de filtration dans des appareils adaptés.

L'augmentation du rendement de récupération obtenu par les techniques précédemment citées présente malheureusement un inconvénient important : la modification physicochimique des eaux de production qui engendre des difficultés de traitement de l'eau.

En effet, l'eau coproduite avec le pétrole contient un reliquat de produits chimiques injectés et entre autre, de polymère utilisé.

Ce dernier présente alors un poids moléculaire et une anionicité modifiés. Ceci engendre deux problèmes :

- Difficulté de séparation initiale dans la première cuve de séparation et dans les séparateurs à plaques inclinées. Ce phénomène est particulièrement important dans l'ASP où une partie du pétrole est émulsifiée d'une manière assez stable et sa coalescence est problématique,

- L'augmentation de viscosité de l'eau produite avec une difficulté de traitement de séparation du pétrole et des matières en suspensions mouillées par celui-ci. La vitesse de séparation est directement liée par la loi de Stokes à la viscosité.

$$Vs = (2/9) * ((Qp-Qf)/ \eta).g.R^2$$

où Vs : Vitesse de sédimentation
g = accélération de gravité
$\eta$ = viscosité
Qp = masse volumique de la particule en suspension
$Q_f$ = masse volumique du fluide
R = rayon de la particule résiduelle

Les appareils de traitement d'eau de production sont habituellement dimensionnés pour fonctionner avec des viscosités d'eau à traiter de l'ordre de 1.5 à 2 cps. Avec des viscosités d'eau de production de 10 cps par exemple, il faut un temps de séjour 5 fois plus élevé et des appareils dont la taille est multipliée par 5.

Si cette séparation n'est pas efficace, les quantités de pétrole et de matières en suspension sont très élevées, et nécessitent des volumes de filtres (par exemple filtres « Nut-Shell » car à base de coquille de noix) énormes avec des lavages très fréquents. Au-delà d'une certaine viscosité, l'opération devient impossible.

Pour revenir à des conditions standards de traitement des eaux, plusieurs solutions ont été proposées :

1°) Précipitation du polymère par des sels métalliques trivalents (sulfate d'Aluminium, polychlorure d'aluminium, chlorure ferrique...). Cette méthode est possible mais a 5 inconvénients :

- L'acidification de l'eau par les réactifs qu'il faut corriger pour éviter les corrosions,
- La formation d'un précipité colloïdal très difficile à traiter,
- La nécessité de mettre en place un décanteur-floculateur de grande dimension et un système de traitement de boues par centrifugation/filtration,
- L'élimination de la boue en décharge (lorsque cela est permis) ou son incinération,
- Il est très difficile de récupérer l'huile absorbée sur le précipité.

C'est une opération très complexe non adaptée aux conditions de champs.

2°) Précipitation du polymère par un polymère cationique.
Le polymère le plus adapté est le poly DADMAC (poly diallyl dimethyl ammonium chloride). Par rapport au cas précédent, il n'y a pas d'acidification mais :

- Le précipité a la consistance du chewing gum et est très difficile à traiter,
- L'huile reste co-précipitée et ne peut être récupérée.

3°) Précipitation par adsorption, par exemple, sur une bentonite calcique mais avec des quantités de boues qui augmentent par rapport aux cas précédents.

4°) L'ultrafiltration qui bien que donnant de bons résultats au laboratoire a l'inconvénient majeur d'avoir une longévité très faible sur champ à cause des absorptions irréversibles qu'on peut seulement, en partie, traiter par des cycles acide fort - base, difficiles à mettre en place sur le terrain.

5°) De nombreux essais de dégradation biologique ont échoué.

On sait que l'on peut dégrader la viscosité du polymère avec des quantités limitées d'oxydant, par exemple avec l'ozone, le persulfate, le perborate, l'hypochlorite, l'eau oxygénée, etc... Cette réaction peut être très rapide (quelques dizaines de minutes si la température est au-delà de 40°C), ce qui est bien adapté aux conditions pétrolières. Cependant le procédé n'est pas mis en oeuvre pour une raison très simple. Si on souhaite atteindre un niveau de dégradation du polymère suffisant en un temps court, il est nécessaire d'injecter une quantité élevée d'oxydant. De la sorte, il reste une quantité importante d'oxydant libre qui sera disponible pour dégrader le polymère « neuf » que l'on va dissoudre dans cette eau traitée. Cela diminuera fortement la viscosité d'injection, et donc la récupération ultérieure du pétrole.
La dégradation engendrée est alors telle que l'ajout de stabilisants de polymère, tels que le mélange isopropanol (agent sacrificiel), thiourée (agent capteur de radicaux) et eau dans lequel est ajouté le polymère, ou de compositions de stabilisants intégrés au polymère tels que décrits dans la demande FR 0953258 avant dilution avec le fluide d'injection ne suffisent pas à stabiliser la viscosité de la solution du polymère à un niveau satisfaisant.
Le document US 2007/0102359 décrit un procédé de traitement d'eau à l'aide de membranes. Il peut notamment s'agir d'eau issue de la récupération assistée du pétrole, qui après traitement peut être réutilisée pour l'irrigation mais aussi pour l'approvisionnement en eau de meilleure qualité. Ce procédé permet d'éliminer toute trace de composés inorganiques et organiques par flottation, filtration, adsorption, décomposition des polymères éventuellement présents sous forme de dioxyde de carbone et d'eau. Il comprend plusieurs étapes dont la première consiste à aérer l'eau à traiter, c'est-à-dire à l'exposer à de l'oxygène. Simultanément à l'étape d'aération, l'eau peut être cisaillée. Le procédé décrit dans le document US 2007/0102359 peut également comprendre des étapes d'oxydation, de filtration, d'adsorption, d'oxydation intense, de filtration, d'ultra filtration, de nano filtration, et d'hyper filtration. Ces étapes permettent de totalement éliminer les polymères de type polyacrylamide de la solution d'injection. En revanche, la durée des étapes d'oxydation et d'oxydation intense ne sont pas précisées. En outre, ce procédé ne comprend pas d'étape d'addition de réducteur permettant de neutraliser l'éventuel excès d'oxydant.
Le procédé décrit dans US 2007/0102359 est mis en oeuvre de manière à éliminer toute trace de contaminant organique et/ou inorganique. Il ne s'agit pas de contrôler l'oxydation de polymères organiques.
Ces conditions rendraient ainsi la qualité de l'eau traitée peu compatible avec sa réutilisation dans des procédé de récupération assistée du pétrole. En effet, afin de la rendre compatible avec l'eau de champ, elle devrait préalablement être dégazée à un taux de 20 ppb environ d'oxygène ce qui correspond à la norme d'injection pour éviter l'oxydation des tuyauteries et éviter la dégradation du polymère. En outre, des sels (Na$^+$, Ca$^{2+}$, Mg$^{2+}$) devraient être dissous afin rendre cette eau compatible avec l'eau du champ.
Ces opérations engendreraient donc des coûts totalement prohibitifs liés à de forts investissements. Eu égard aux étapes de ce procédé et aux volumes d'eau impliqué, l'utilisation de ce procédé n'est certainement pas envisageable sur le matériel existant dans les installations de récupération assistée de pétrole considérées.
Le problème que se propose de résoudre l'invention est donc de mettre au point un procédé efficace de traitement de l'eau de production, sans présenter les inconvénients ci-dessus évoqués.

## Description de l'invention

L'invention a pour objet un procédé de traitement de l'eau issue de la production du pétrole à partir de réservoirs exploités selon des techniques de récupération assistée du pétrole à base de polymère. Il peut notamment être utilisé en utilisation le matériel existant dans les installations de récupération assistée de pétrole.

De manière générale, entre 200 et 1000 m$^3$ d'eau peuvent être injecté chaque jour dans un puits de pétrole. En outre, un champ pétrolier peut comprendre de 20 (plateformes ou FPSO avec très forts débits) à plus de 10 000 puits. Tous ces champs sont équipés de matériel de traitement d'eau (séparateur initial, décanteurs à plaques inclinées, flottation nut-shell filters) avant réinjection adaptés aux conditions d'injection avant addition de polymère. Les constructeurs en particulier limitent leur garantie à une viscosité d'entrée de 2 centipoises.

Le procédé selon la présente invention permet de solutionner les problèmes de séparation eau/huile, de purification de l'eau de son huile résiduelle et de réduction des solides en suspension. Dès lors, l'eau est réutilisable pour re-solubiliser du polymère afin d'être réinjectée efficacement en solution dans le réservoir.

La présente invention consiste à épurer l'eau coproduite lors de la récupération assistée du pétrole à base de polymères par une séquence de traitement. Cette séquence implique :

- tout d'abord, l'ajout en excès, dans l'eau de production, d'un oxydant de type, par exemple, hypochlorite de sodium à une concentration permettant une dégradation suffisante du polymère et dans un temps court, de sa viscosité,
- la neutralisation de l'effet néfaste de cet excès nécessaire d'oxydant par injection de réducteur.

Le réducteur permet ainsi une inversion du potentiel redox empêchant l'oxydation et donc la dégradation du polymère destiné à être ajouté dans cette eau. En effet, l'eau ainsi traitée est ensuite réutilisée pour dissoudre du polymère « neuf » et permet d'obtenir une solution visqueuse de viscosité stable destinée à être injectée dans le réservoir dans un procédé de récupération améliorée du pétrole.

En d'autres termes, l'invention a pour objet un procédé de traitement de l'eau de production produite à l'issue d'un procédé de récupération assistée du pétrole contenu dans un réservoir, ladite eau contenant au moins un polymère hydrosoluble, selon lequel :

- on injecte dans l'eau de production un oxydant dans une quantité telle que la viscosité de ladite eau est abaissée à une valeur inférieure à 2 cps, avantageusement de l'ordre de 1.5 cps, dans un temps inférieur à 5 heures à compter de l'injection de l'oxydant,
- on injecte ensuite un réducteur dans une quantité nécessaire pour neutraliser la totalité de l'oxydant alors en excès.

L'un des buts de ce procédé consiste à ne pas dégrader le polymère au-delà de la viscosité nécessaire au bon fonctionnement des appareils mis en oeuvre dans la récupération assistée de pétrole, étant donné que cette viscosité de 2 cps participe à la récupération assistée du pétrole par une réduction de l'addition de nouveau polymère, surtout dans le cas d'huiles légères où la viscosité requise est faible. En conséquence, de manière générale, le temps imparti pour atteindre une viscosité inférieure à 2 cps ne permet donc pas la réaction totale oxydant - polymère. La quantité d'oxydant dépend donc également de la viscosité à atteindre dans le temps imparti. Elle dépend aussi de la composition de l'eau et en particulier des impuretés soufrées (H$_2$S) se trouvant souvent dans les eaux de production.

C'est la raison pour laquelle des essais de laboratoire doivent être réalisés pour déterminer les quantités nécessaires.

Lorsque l'eau de production traitée est réinjectée dans le réservoir, on y ajoute au préalable, au moins un polymère hydrosoluble. Dans tous les cas, l'excès d'oxydant a été neutralisé par le réducteur avant l'ajout du polymère.

Le procédé de traitement de l'eau de production selon l'invention comprend plusieurs étapes que sont successivement :

- des étapes de séparations huile/eau de production,
- des étapes de flottation et/ou décantation,
- des étapes de filtration.

Dans un mode de réalisation préféré, l'oxydant est ajouté au début du procédé de traitement de l'eau afin que la viscosité diminue le plus tôt possible dans le processus. On ajoutera en particulier l'oxydant au choix :

- pendant les phases de séparation,
- entre les phases de séparation et de flottation et/ou de décantation,
- pendant les phases de flottation et/ou de décantation.

De même, le réducteur est ajouté en fin de procédé de traitement de l'eau, par exemple lors des phases de filtration.

Par temps court, on entend des temps de séjours compatibles avec les débits de l'industrie pétrolière à savoir des temps de traitement de moins de 10 heures, préférentiellement de moins de deux heures, afin de limiter la taille des unités dans lesquelles cette séquence d'épuration est réalisée. Il peut être globalement compris entre 1 et 5h.

Le polymère est en pratique un polymère à base d'acrylamide, avantageusement copolymérisé avec par exemple l'acide acrylique, l'acide 2-acrylamido-2-méthylpropane sulfonique ou la N-vinyl pyrrolidone.

Comme déjà dit, la présente invention consiste à détruire l'excès d'oxydant par un réducteur efficace permettant une inversion du potentiel redox.

Le procédé suivant l'invention peut s'appliquer à l'ensemble des oxydants forts permettant une dégradation rapide du poids moléculaire du polymère. Par exemple, l'oxydant peut être un persulfate, un perborate, un peroxyde d'hydrogène, de l'ozone, de l'hypochlorite de sodium, du chlorite de sodium. De manière générale, le contre ion des persulfate, perborate, hypochlorite et chlorite peut être choisi dans le groupe comprenant les alcalins et les alcalino terreux.

Dans un mode de réalisation préféré, on utilise de l'hypochlorite de sodium produit par électrolyse à partir de l'eau de production ou de la saumure. Ces appareils d'électrolyse sont construits par :

- SEVERN TRENT DE NORA (USA)
- ELECTROLYTIC TECHNOLOGIES CORPORATION (USA)
- DAIKI ATAKA (Japon)

Dans certains cas, on peut utiliser une saumure enrichie en sel à partir de dissolution de NaCl notamment lorsque la salinité de la saumure à injecter est insuffisante pour la production d'hypochlorite de sodium.

En pratique, l'oxydant est injecté dans l'eau de production à raison de 20 à 500 ppm par rapport au poids de l'eau de production, avantageusement de 30 à 200 ppm.

Toutefois, l'hypochlorite de sodium réagissant par oxydation sur le sulfure d'hydrogène ($H_2S$), le système mettant en oeuvre de l'hypochlorite de sodium comme oxydant est limité aux champs à faible et moyenne teneur en $H_2S$ (inférieure à 250 ppm) pour éviter les trop fortes consommations d'hypochlorite de sodium.

L'oxydation et la destruction du sulfure d'hydrogène sont recherchées sur certains champs pour diminuer la corrosion des équipements. Dans ce cas des doses plus importantes d'hypochlorite de sodium peuvent être utilisées.

En ce qui concerne le contrôle de procédé, il est possible de doser précisément le réducteur en régulant sa quantité par une sonde d'oxydoréduction.

L'agent réducteur est ajouté avant l'étape de dissolution du polymère à injecter, préférentiellement 2 heures avant, plus préférentiellement 1 heure avant, de telle sorte que le réducteur ait le temps de réagir avec l'excès d'oxydant.

Les agents réducteurs qui peuvent être utilisés sont, à titre non exhaustif, des composés tels que les sulfites, les bisulfites, les métabisulfites (et notamment le métabisulfite , les dithionites de metaux alcalins ou alcalino terreux). Il peut également s'agir de l'hydrazine et ses dérivés hydroxylamine ou encore un mélange borohydrure de sodium et bisulfite. Leur utilisation pour les polyacrylamides est décrite dans le brevet US 3,343,601. Tous agissent en tant qu'agent réducteur modifiant le potentiel redox de la solution aqueuse dans laquelle ils sont introduits. Il est également possible d'envisager d'utiliser un agent réducteur choisi parmi les sulfites organiques tels que les sulfites alkylés, les hydrosulfites d'alkyle, les sulfinates, les sulfoxylates, les phosphites, mais aussi l'acide oxalique ou formique, les sels d'érythorbate, les carbohydrazides.

Selon l'invention, le réducteur est injecté à raison de 10 à 300 ppm par rapport au poids de l'eau de production, avantageusement de 15 à 200 ppm.

Aux conditions habituelles de champ où la température de la saumure est supérieure à 40°C, cette réaction est très rapide.

L'invention a également pour objet un procédé amélioré de récupération assistée du pétrole consistant à injecter dans le réservoir une solution d'eau et d'au moins un polymère hydrosoluble selon lequel l'eau utilisée correspond à l'eau de production traitée selon le procédé précédemment décrit.

Dans la méthode habituelle d'injection, on rajoute juste avant ladite injection un réducteur d'oxygène pour éliminer les problèmes liés à l'introduction d'oxygène provenant des équipements de dissolution et pour éviter la corrosion des systèmes d'injection.

Toutefois, la quantité ajoutée :

- est faible par rapport à la quantité nécessaire pour réduire l'oxydant en excès. Elle est en fort excès par rapport à l'oxygène présent (20 à 100 ppb) et elle est standardisée à 5 ppm,
- et est ajoutée après dissolution du polymère.

Dans le procédé de l'invention, le réducteur d'oxydant est ajouté avant la dissolution du polymère pour éviter sa dégradation rapide et le réducteur d'oxygène est maintenu à l'injection pour éliminer l'oxygène provenant en particulier du matériel de dissolution du polymère (doseur à poudre, dispersion, cuves de maturation), qui à faible taux engendre corrosion et éventuellement une dégradation lente du polymère.

Le réducteur d'oxygène peut être choisi dans le groupe de réducteurs d'oxydant mentionné précédemment.

L'invention et les avantages qui en découlent ressortent bien des exemples de réalisation suivant à l'appui de la figure annexée.

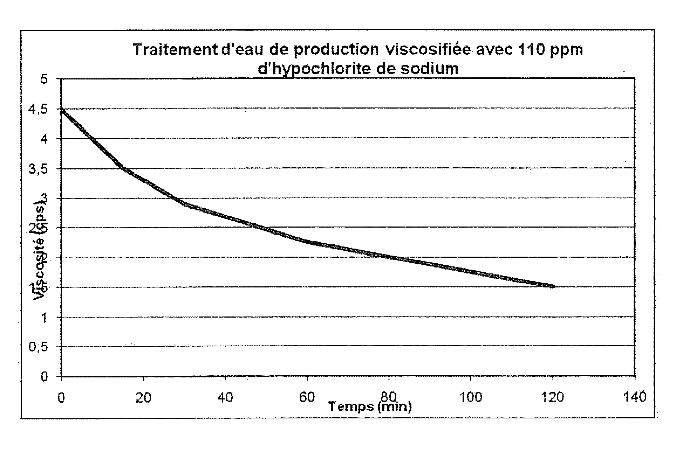

La figure 1 est une représentation graphique de la viscosité de l'eau de production après ajout d'oxydant selon l'exemple 1.

Exemple 1 : exemple comparatif

On prépare une solution aqueuse de polymère à partir de 1000 ppm de polyacrylamide de poids moléculaire 20 millions de g/mol, de taux d'hydrolyse 30%, que l'on dissout dans une eau de composition suivante :

| | |
|---|---|
| Na⁺ | : 947 mg/L |
| Cl⁻ | : 1462 mg/L |
| $H_2S$ | : 20 ppm |
| Température | : 44°C |

On injecte cette solution de polymère dans un réservoir. La viscosité de l'huile est de 10 cps, la viscosité de la solution de polymère injectée est de 40 cps. La viscosité de l'eau de production est de 4,5 cps avec 300 ppm de polymère. A cette viscosité, les matériels standards de production ne fonctionnent pas à moyen terme. En effet, le flottateur a une efficacité très faible en produisant une eau fluide à 250 ppm d'huile et 40 ppm de matières en suspension, qui saturent rapidement les filtres « nut-shell ».

Le traitement par oxydation va donner les résultats suivants :

A l'aide d'un appareil d'électrolyse utilisant l'eau de production comme saumure, on génère une quantité d'hypochlorite de sodium de 110 ppm.
En 15 minutes, la viscosité de la solution a chuté à 3,5 cps.

Comme le montre la figure 1, au bout de 30 minutes, la viscosité de la solution a chuté à 2,9 cps. A 60 minutes à 2,25 cps. A 120 minutes à 1,5 cps, ce qui permet d'effectuer un traitement d'eau standard et efficace

Sur champ, on applique au niveau du décanteur à plaque inclinée une dose de 110 ppm d'hypochlorite de sodium.

A la sortie du flottateur la viscosité est inférieure à 2 cps (1,4 cps à 1,7 cps) et les filtres « Nut-shell » montrent alors des périodes de lavage adéquats.

Cette eau traitée puis épurée de son huile résiduelle et de ses solides en suspension est utilisée pour dissoudre à nouveau du polymère avant réinjection. On effectue une première dissolution à 10 gr/litre puis une dilution en ligne à 1000 ppm.

Un prélèvement de cette solution en conditions contrôlées est vieilli pendant 24 heures. Alors qu'avec une eau non traitée par l'hypochlorite, la viscosité est de 40 cps, la solution dans l'eau traitée et épurée est seulement de 14 cps ou une dégradation de plus de 60%.

Cette dégradation est d'autant plus élevée que le poids moléculaire du polymère est élevé, ce qui réduit très rapidement, initialement, la viscosité de la solution de polymère balayant le réservoir et donc son efficacité pour récupérer du pétrole. D'autre part, l'hypochlorite réagissant par oxydation sur l'$H_2S$, le système est limité aux champs à faible et moyenne teneur en $H_2S$ (inférieure à 250 ppm) pour éviter les trop fortes consommations d'hypochlorite de sodium.

Exemple 2 : exemple 1 selon l'invention

Dans les mêmes conditions que l'exemple 1, on réalise le traitement hypochlorite de sodium (110 ppm) au niveau du décanteur à plaque inclinée puis on rajoute 25 ppm d'hydrosulfite de sodium au niveau des filtres nut-shell et on effectue enfin la dissolution du polymère dans des conditions standards. La viscosité d'un prélèvement de la solution injectée au bout de 24 heures de vieillissement est alors stable à 40 cps, c'est-à-dire sans dégradation par rapport à un traitement standard. Dans les essais effectués, la quantité d'huile présente peu d'influence sur la consommation d'hypochlorite.

Exemple 3 : exemple 2 selon l'invention

Dans ce cas, on traite un puits avec un système ASP avec la même saumure mais adoucie, à savoir les ions calcium et magnésium sont substitués par du sodium.

Les quantités de réactifs ajoutés sont les suivants :

- Polyacrylamide (20 millions 30% hydrolyse) 2000 ppm,
- Surfactant 4000 ppm,
- Carbonate de soude 5000 ppm.

La viscosité d'injection est de 45 cps.
L'eau produite a les caractéristiques suivantes :

- Viscosité de l'eau produite : 5.3 cps,
- pH de l'eau produite : 8.5
- Polyacrylamide résiduel

  ❖ 650 ppm,
  ❖ Poids moléculaire 3.5 millions,

- Surfactant résiduel:

  ❖ 800 ppm,

Par des essais de laboratoire, on détermine qu'il faut ajouter à cette eau produite 150 ppm d'hypochlorite de sodium pour réduire la viscosité à moins de 2 cps en 2 heures et qu'il faut, à ce moment, rajouter 40 ppm d'hydrosulfite de sodium pour détruire l'hypochlorite de sodium résiduel.

On applique ce traitement, comme précédemment. Après 24 heures de vieillissement, la viscosité s'est maintenue à 45 cps.

**Revendications**

1. Procédé de traitement de l'eau de production produite à l'issue d'un procédé de récupération assistée du pétrole contenu dans un réservoir, la récupération étant assistée à base d'un polymère et l'eau de production produite contenant au moins un polymère hydrosoluble, ledit procédé de traitement comprenant les étapes suivantes :

- on injecter dans l'eau de production un oxydant dans une quantité telle que la viscosité de ladite eau de production est abaissée à une valeur inférieure à 2 cps, avantageusement de l'ordre de 1.5 cps, dans un délai inférieur à 5 heures à compter de l'injection de l'oxydant,
- on injecte ensuite, après qu'une viscosité inférieure à 2 cps est atteinte, un réducteur dans une quantité nécessaire pour neutraliser la totalité de l'oxydant alors en excès,

le délai imparti pour atteindre une viscosité inférieure à 2 cps ne permettant pas une réaction totale oxydant-polymère.

**2.** Procédé selon la revendication 1, **caractérisé en ce que** le délai est inférieur à 2 heures.

**3.** Procédé selon la revendication 1, **caractérisé en ce que** le polymère est à base d'acrylamide, avantageusement copolymérisé avec l'acide acrylique, l'acide 2-acrylamido-2-méthylpropane sulfonique ou la N-vinyl pyrrolidone.

**4.** Procédé selon la revendication 1, **caractérisé en ce que** l'oxydant est choisi dans le groupe comprenant persulfate, perborate, peroxyde d'hydrogène, ozone, hypochlorite de sodium, chlorite de sodium.

**5.** Procédé selon la revendication 4, **caractérisé en ce que** l'hypochlorite de sodium est l'oxydant préféré et est produit par électrolyse à partir de saumure ou de l'eau de production.

**6.** Procédé selon la revendication 1, **caractérisé en ce que** l'oxydant est injecté à raison de 20 à 500 ppm, avantageusement de 30 à 200 ppm.

**7.** Procédé selon la revendication 1, **caractérisé en ce que** le réducteur est choisi dans le groupe comprenant sulfites, bisulfites, métabisulfites, hydrazine et ses dérivés hydroxylamine, mélange borohydrure de sodium et bisulfite, sulfites alkylés, hydrosulfites d'alkyle, sulfinates, sulfoxylates, phosphites, acide oxalique ou formique, sels d'érythorbate, carbohydrazides.

**8.** Procédé selon la revendication 1, **caractérisé en ce que** le réducteur est injecté à raison de 10 à 300 ppm, avantageusement de 15 à 200 ppm.

**9.** Procédé selon la revendication 1, **caractérisé en ce qu'**il comprend plusieurs étapes que sont successivement :

- séparations huile/eau de production,
- flottation et/ou décantation,
- filtration.

**10.** Procédé selon la revendication 9, **caractérisé en ce que** l'oxydant est ajouté, au choix :

- pendant les étapes de séparation,
- entre les étapes de séparation et de flottation et/ou de décantation,
- pendant les étapes de flottation et/ou de décantation,

**11.** Procédé selon la revendication 9, **caractérisé en ce que** le réducteur est ajouté pendant les étapes de filtration.

**12.** Procédé selon la revendication 1, **caractérisé en ce que** la teneur en sulfure d'hydrogène du gisement est inférieure à 250 ppm.

**13.** Procédé amélioré de récupération assistée du pétrole consistant à injecter dans le réservoir une solution d'eau et de polymère hydrosoluble selon lequel, l'eau utilisée correspond à l'eau de production traitée selon le procédé objet de l'une des revendications 1 à 12.

**Patentansprüche**

**1.** Verfahren zur Aufbereitung des Produktionswassers, das am Ende eines Verfahrens zur unterstützten Wiedergewinnung des in einem Behälter enthaltenen Erdöls entstanden ist, wobei die Wiedergewinnung auf Basis eines Polymers unterstützt wird und das entstandene Produktionswasser mindestens ein wasserlösliches Polymer enthält, wobei das Aufbereitungsverfahren die folgenden Schritte umfasst:

- in das Produktionswasser wird ein Oxidationsmittel in einer derartigen Menge eingespritzt, dass die Viskosität des Produktionswassers auf einen Wert unter 2 cps, vorteilhafter Weise in der Größenordnung von 1,5 cps, in einem Zeitraum unter 5 Stunden ab der Einspritzung des Oxidationsmittels abgesenkt wird,
- nach dem Einspritzen wird, nachdem eine Viskosität von unter 2 cps erreicht ist, ein Reduktionsmittel in einer Menge eingespritzt, die notwendig ist, um das gesamte, nun im Überschuss vorhandene Oxidationsmittel zu neutralisieren,

wobei der zum Erreichen einer Viskosität von unter 2 cps eingeräumte Zeitraum keine Gesamtreaktion Oxidationsmittel/Polymer zulässt.

**2.** Verfahren nach Anspruch 1, **dadurch gekennzeichnet, dass** der Zeitraum kürzer als 2 Stunden ist.

**3.** Verfahren nach Anspruch 1, **dadurch gekennzeichnet, dass** das Polymer auf Basis von Acrylamid ist, das vorteilhafter Weise mit Acrylsäure, 2-Acrylamid-2-Methylpropansulfonsäure oder N-Vinylpyrrolidon copolymerisiert ist.

**4.** Verfahren nach Anspruch 1, **dadurch gekennzeichnet, dass** das Oxidationsmittel aus der Gruppe ausgewählt ist, die Persulfat, Perborat, Wasserstoffperoxid, Ozon, Natriumhypochlorit, Natriumchlorit umfasst.

**5.** Verfahren nach Anspruch 4, **dadurch gekennzeichnet, dass** das Natriumhypochlorit das bevorzugte Oxidationsmittel ist und durch Elektrolyse aus Sole oder dem Produktionswasser hergestellt ist.

**6.** Verfahren nach Anspruch 1, **dadurch gekennzeichnet, dass** das Oxidationsmittel in einem Verhältnis von 20 bis 500 ppm, vorteilhafter Weise 30 bis 200 ppm eingespritzt wird.

**7.** Verfahren nach Anspruch 1, **dadurch gekennzeichnet, dass** das Reduktionsmittel aus der Gruppe ausgewählt ist, die Sulfite, Bisulfite, Metabisulfite, Hydrazin und seine Hydroxylaminderivate, ein Gemisch aus Natriumborhydrid und Bisulfit, alkylierte Sulfite, Alkylhydrosulfite, Sulfinate, Sulfoxylate, Phosphite, Oxal- oder Ameisensäure, Erythorbatsalze, Carbohydrazide umfasst.

**8.** Verfahren nach Anspruch 1, **dadurch gekennzeichnet, dass** das Reduktionsmittel in einem Verhältnis von 10 bis 300 ppm, vorteilhafter Weise von 15 bis 200 ppm eingespritzt wird.

**9.** Verfahren nach Anspruch 1, **dadurch gekennzeichnet, dass** es mehrere Schritte umfasst, die da nacheinander sind:

- Trennungsschritte Öl/Produktionswasser
- Flotation und/oder Dekantieren
- Filtration.

**10.** Verfahren nach Anspruch 9, **dadurch gekennzeichnet, dass** das Oxidationsmittel wahlweise:

- während der Trennungsschritte,
- zwischen den Trennungs- und Flotations- und/oder Dekantierschritten,
- während der Flotations- und/oder Dekantierschritte zugesetzt wird.

**11.** Verfahren nach Anspruch 9, **dadurch gekenn-**

**zeichnet, dass** das Reduktionsmittel während der Filtrationsschritte zugesetzt wird.

**12.** Verfahren nach Anspruch 1, **dadurch gekennzeichnet, dass** der Gehalt an Wasserstoffsulfid der Lagerstätte unter 250 ppm beträgt.

**13.** Verbessertes Verfahren zur unterstützten Wiedergewinnung von Erdöl, das darin besteht, in den Behälter eine Lösung aus Wasser und wasserlöslichem Polymer einzuspritzen, gemäß dem das verwendete Wasser dem Produktionswasser entspricht, das nach dem Verfahren aufbereitet wurde, das den Gegenstand eines der Ansprüche 1 bis 12 bildet.

## Claims

**1.** A process for treatment of produced water obtained from an enhanced oil recovery process from a reservoir, recovery process being assisted by a polymer and said produced water obtained containing at least one water soluble polymer, said process for treatment comprising the following steps:

- injecting an oxidising agent into produced water in a quantity such that the viscosity of said produced water is reduced to a value below 2 cps, advantageously of the order of 1.5 cps, within a time period shorter than 5 hours from the oxidising agent injection,
- once a viscosity lower than 2 cps is reached, injecting a reducing agent in the required quantity to neutralise all the resulting excess of oxidising agent.

the duration needed to reach a viscosity of less than 2 cps not allowing the complete oxidation of the polymer.

**2.** The process according to claim 1, **characterised in that** the time period is less than 2 hours.

**3.** The process according to claim 1, **characterised in that** the polymer is acrylamide-based, advantageously co-polymerised with acrylic acid, 2-acrylamido-2-methylpropane sulfonic acid or N-vinyl pyrrolidone.

**4.** The process according to claim 1, **characterised in that** the oxidising agent is selected from the group comprising persulfate, perborate, hydrogen peroxide, ozone, sodium hypochlorite, sodium chlorite.

**5.** The process according to claim 4, **characterised in that** sodium hypochlorite is the preferred oxidising agent and is produced by electrolysis from brine or produced water.

6. The process according to claim 1, **characterised in that** the oxidising agent is injected at 20-500 ppm, advantageously at 30-200 ppm.

7. The process according to claim 1, **characterised in that** the reducing agent is selected from among the group comprising sulfites, bisulfites, metabisulfites, hydrazine and its hydroxylamine derivatives, a mixture of sodium borohydride and bisulfite, alkyl sulfites, alkyl hydrosulfites, sulfinates, sulfoxylates, phosphites, oxalic or formic acid, erythorbate salts, carbohydrazides.

8. The process according to claim 1, **characterised in that** the reducing agent is injected at 10-300 ppm, advantageously at 15-200 ppm.

9. The process according to claim 1, **characterised in that** it comprises several steps that are successively:

   - oil/produced water separations,
   - flotation and/or decantation,
   - filtration.

10. The process according to claim 9, **characterised in that** the anti-oxidant is added in any of these ways:

    - during the separation steps,
    - between the separation and flotation and/or decantation steps,
    - during the flotation and/or decantation steps.

11. The process according to claim 9, **characterised in that** the reducing agent is added during the filtration steps.

12. The process according to claim 1, **characterised in that** the hydrogen sulfide content of the deposit is less than 250 ppm.

13. An improved enhanced oil recovery process consisting in injecting into the reservoir a solution of water and water-soluble polymer wherein the water used is produced water treated according to the process in any one of claims 1 to 12.

Traitement d'eau de production viscosifiée avec 110 ppm d'hypochlorite de sodium

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0953258
- US 20070102359 A
- US 3343601 A